# EUROPEAN PATENT SPECIFICATION

(11) **EP 1 920 653 B1**
(45) Date of publication and mention of the grant of the patent: **29.07.2009**
(21) Application number: 07017845.4
(22) Date of filing: 12.09.2007
(51) Int. Cl.: A01K 97/02

(54) **Swimfeeder**
Futterkorb
Piège à poissons

(30) Priority: 09.11.2006 GB 0622345
(43) Date of publication of application: 14.05.2008
(73) Proprietor: Drennan International Limited, Oxford, OX4 2EX (GB)
(72) Inventor: Drennan, Peter John, Oxon OX44 9HG (GB)
(74) Representative: Blood, Marlon

(56) References cited:
- FR-A- 2 650 155
- GB-A- 2 139 461
- GB-A- 2 215 171
- GB-A- 2 298 115

## Description

The present invention relates to the field of swimfeeders.

A swimfeeder is a device used in fresh water angling that is attached to a fishing line near to the hook and which holds bait for attracting fish to the hook. The swimfeeder is adapted to be cast and to sit on the river or lake bed. A variety of types of bait may be used with the swimfeeder, including particulate bait such as maggots, seeds etc, and ground bait.

In river or lake fishing with a feeder, a bite is normally indicated by a quiver tip at the end of the rod. It is a distinct advantage for an angler to be able to adjust the weight of the swimfeeder such that it sits on the river bed while the quiver tip retains useful sensitivity as a bite indicator.

Traditionally, adjustment to the weight of the swimfeeder has typically been carried out by affixing extra lead in the form of shot, strips and the like to the body of the swimfeeder to supplement the weight already present at its nose or base. One solution involves the use of small lead weights with thin tab/legs which are bent to grip the body of the swimfeeder.

Once at the waterside, even an experienced angler can judge only roughly the amount of weight required for a given size of swimfeeder in order for it to behave correctly. These approaches have proved to be rather inconvenient in the messy conditions encountered at the waterside.

Thus, the common practice has developed in which the angler pre-loads a considerable range of swimfeeders with a variety of different weights and transports all those swimfeeders to his swim, or to the peg he has drawn in a fishing match. If the weight he estimates is not quite right, the popular approach is for him to remove the whole feeder from the terminal tackle and replace it with a different one.

GB2215171 discloses a swimfeeder to which a weight may be attached to the body of the swimfeeder.

GB220878 discloses an adjustable swlmfeeder which comprises a compartment designed to carry the load required to hold the swimfeeder In the preferred position on the river or lake bottom, this load can be adjusted to the angler's requirements by loading a weight of a different mass into the compartment.

GB2139461 discloses a swimfeeder with a pair of compartments 4,5 located in separated regions of the swimfeeder. Neither, one, or both of the compartments may be filled with a single rod according to river conditions.

FR2650155 discloses a bait dropper for sea fishing. The bait dropper Is used by being dropped directly underneath the rod top. The bait dropper is not adapted or suitable for casting.

With the foregoing in mind, according to an aspect of the Invention, the present invention may provide a swimfeeder kit comprising a swimfeeder having an elongate body having an open end and defining a region for weights and a region for balt, a cap for closing the open end and a set of weights, wherein more than one of the said weights may be loaded, at the selection of the angler, into the weight region via the open end and occupy the weight region at the same time, **characterised in that** the centre of gravity of the weights in the weight region is kept on the same longitudinal axis of the body independent of the number of weights loaded in the weight region.

A swimfeeder kit in accordance with the present invention enables the angler to load one of said weights into the weight region, or as needed more than one of said weights Into the weight region so that they occupy it at the same time, whereby, depending on the selection of weights from the set, the angler is able to adjust the overall mass loaded into the swimfeeder to match his estimate of that required by current river conditions. Should that estimate prove to be incorrect or the fishing conditions change, the weight region of the body can be loaded with different combinations of weights selected from the set, preferably, without needing to remove the swimfeeder from the line.

The number of combinations of possible loading depends on the number of weights which can be accommodated by the weight region of the body at the same time, the number of weights in the set, and their mass ratio.

Preferably, each weight in the set has a different mass. By virtue of each weight having a different mass, the number of possible loadings which can be applied to the swimfeeder is maximised for a given number of weights in the set. In other embodiments, some or all of the weights may have the same mass.

Preferably, the set comprises at least one weight made from a first material having a first density, and at least one weight made from a second material having a second density, wherein the first and second density are different. By virtue of the set consisting of weights of different density, for a weight region of a given volume, the range of loadings which may be applied to the swimfeeder can be widened. A preferred choice of materials is mazak or zamak and lead, the latter material having a distinctly higher density than the former materials.

Preferably, the weight region is located at the bottom of the body, the weights comprise slabs, and the weight region is adapted such that slabs in the weight region are held In minor face-to-minor face orientation. By confining the slabs to the bottom of the body in a minor face-to-minor face orientation, the necessary bottom weighting of the swimfeeder body can be achieved while leaving a good continuous volume of bait region in relation to the overall size of the swimfeeder body. When in minor face-to-minor orientation, minor faces of the slabs may be In contact with one other. In other embodiments, structures within the weight region may keep them apart.

Preferably, the body comprises a plurality of through-holes for bait, wherein the through-holes open onto the balt region and not onto the weight region. In this way, the external profile of the swimfeeder body is independent of the load.

Preferably, the body is elongate, and the weight region is adapted such that weights In the weight region are confined so as to prevent their lateral movement.

By so confining the weights, the centre of gravity of the weights is kept on the same longitudinal axis during casting, thereby assisting with casting accuracy. In a preferred embodiment, the weights in the weight region are held by the body in an interference fit.

Preferably, the body is elongate, and the centre of gravity of the weights in the weight region is kept on the same longitudinal axis of the body independent of the number of weights loaded in the weight region. By virtue of the centre of gravity of the weights in the weight region being on the same longitudinal axis independent of the number weights in the weight region, the lateral stability of the swimfeeder during casting is load independent which assists the angler in achieving consistency in casting. Preferably, said longitudinal axis is the central longitudinal axis of the body.

Preferably, the weight region comprises a single compartment defined between a base, a wall upstanding from the base and a formation projecting inwardly from said wall. In other embodiments, the weight region may comprise a plurality of adjacent compartments.

Preferably, the slabs are of identical cross-section, and a first group of the slabs has a first length, and a second group of slabs has a second length, wherein a combination of at least one slab taken from the first group and at least one slab taken from the second group fills the weight region to capacity. In a preferred embodiment, a single first group slab and a single second group slab fill the weight region to capacity. An advantage of filling the single compartment exactly to capacity is that longitudinal motion of the weights is inhibited.

According to a further aspect of the invention, the present invention may provide a swimfeeder suitable for the swimfeeder kit as described above.

According to a further aspect of the invention, the present invention may provide a set of weights suitable for the swimfeeder kit as described above.

According to a further aspect of the invention, the present invention may provide the use of the swimfeeder kit as described above by selecting one or more of said weights from said set and loading the selected weights into the weight region.

The provision of a compartment within the swimfeeder Into which weights can be inserted is advantageous in that it enables the swimfeeder to be loaded in a positive and non-flddly manner which is desirable on the waterside. Also, by filling the compartment to a greater or lesser degree with a suitable combination of discrete weights, the total loading applied to the swimfeeder can be easily varied.

Exemplary embodiments of invention are hereinafter described with reference to the accompanying drawings, in which:
Figure 1 shows an embodiment of a swimfeeder in accordance with the Invention with parts removed and just prior to loading with weights;
Figure 2 shows the swimfeeder of Figure 1 after loading with two discrete weights;
Figure 3 shows swimfeeders similar to that In Figure 2 in a range of sizes and In side, end and perspective views; and
Figure 4 shows side, end and perspective views of another embodiment of a swimfeeder in accordance with the Invention which is loaded with three discrete weights.

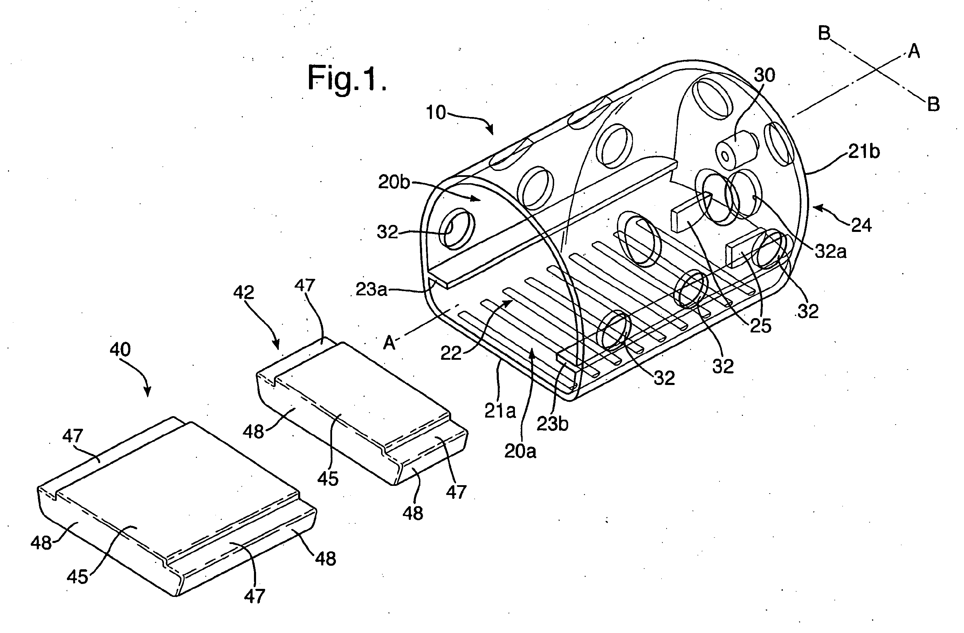

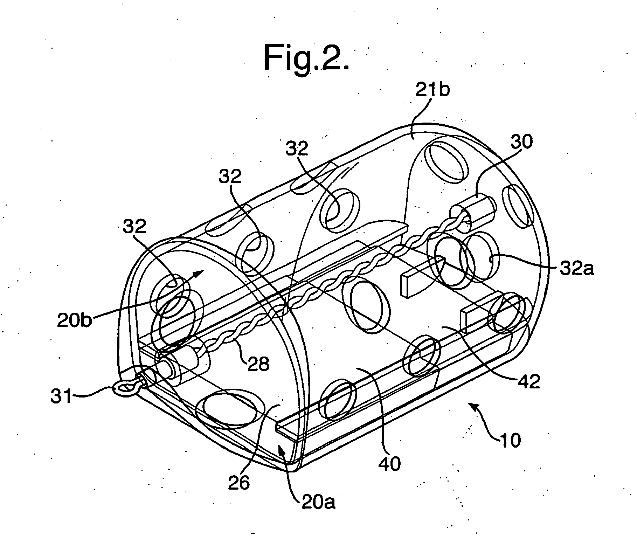

A swimfeeder kit for fresh water angling In accordance with a preferred embodiment of the invention comprises a swimfeeder and a set of discrete weights. The swimfeeder is designated 10 and, as shown in Figure 1, comprises an elongate hollow body 20, made from polymeric material, which is adapted for casting and to sit on the lake or river bed. The body 20 has a central longitudinal axis A-A and is generally of a 'D'-shape in cross-section, with the wall corresponding to the straight back of the 'D' serving as a base wall which is designated 21a, and the curved portion of the 'D' corresponding to the curved wall designated 21b. The body 20 has an open end 22 and a closed end 24. As shown in Figure 2, the open end 22 is closed off by a cap 26 which is held in place by an elastomeric cord or filament 28 which extends from an anchor 30 on the closed end 24 along the longitudinal axis A-A through the cap 26 to a loop connector 31 which it holds in position on the cap 26. The loop connector is the means by which the swimfeeder 10 is attached to the terminal tackle.

The properties of the cord 28 are selected such that during casting and whilst, in situ, on the lake or river bed, the cap 26 is held firmly in place, but also such that there is sufficient elasticity in it to allow the angler to dislodge the cap and hold it off to one side, thereby allowing bait or weights entry into the body 20 as hereinafter described. The body 20 also comprises a plurality of through-holes communicating between the interior and exterior of the body 20 to allow bait contained in the body to escape once the swimfeeder 10 has been cast into the lake or river. The through-holes are labelled 32 except for the one closest to the base 21a on the closed end 24 which is labelled 32a.

The body 20 also includes formations in the form of ledges 23a, 23b which run longitudinally along the inside of the curved wall 21b at a small distance above and parallel to the base wall 21a and protrude inwardly a short distance into the body 20. Abutments 25 are also formed on the inside of the closed end 24 at a level close to the base wall 21a. The region or chamber 20a between the base wall 21, the ledges 23a, 23b and the abutments 25 is the region into which the weights are intended to be loaded. It may be seen that the weight region 10a extends across the full width of the body 20 and is centred on the central longitudinal axis A-A. In this embodiment, it comprises a single compartment 35. The region or cavity 20b between the ledges 23a, 23b, the abutment 25, the curved wall 21b is the region into which bait is to be deposited. In other embodiments (not shown), the ledges 23a, 23b extend further across the width of the body, and, in one embodiment, the ledges are replaced by a single dividing wall. Also, in other embodiments, the base 21a does not extend continuously across the bottom of the body and, in one embodiment, extends only partway, for example, in a manner similar to the ledges 23a, 23b. In other embodiments, the weight region at the bottom of the body 20 is near to the base 21a , rather than immediately adjacent to the base 21a as in the illustrated embodiment.

In this embodiment of the invention, the set of weights comprises four weights per set: two equally-sized large weights, one made from the alloy mazak (density/specific gravity = 6.7) and the other made from lead (density/specific gravity = 11.0), and two equally sized small weights, again one made from mazak and the other made from lead. In Figure 1, a large 20g mazak weight 40 and a small 10g mazak weight 42 are shown in a position ready to enter the compartment 35. Each weight is in the form of a slab comprising a central portion 45 having a pair of lateral wing portions 47 which are of a depth slightly less than the central portion 45 such that the top surface of the central portion stands slightly proud of the top surface of the wing portions. Each weight comprises minor faces 48. The cross-sectional dimensions of the weights are the same and selected so as to facilitate insertion into the compartment 35 and snugly entrain the wing portions 47 between the ledges 23a, 23b and the base wall. 21a as an interference fit as shown in Figure 2. The entrainment of the wing portions 47 means that any slab in the compartment 35 will be held in the same fixed orientation, whereby adjacent slabs will necessarily be held in minor face-to-minor face orientation. Also, lateral movement across the body, that is in a direction parallel to the axis B-B, is also inhibited by the entrainment.

Further, the overall combined length of the large weights 40 and the small weight 42 is designed to ensure that when the cap is in the closed position the weights are snugly captured in contact with the abutments 25 and the cap 26. By selecting the dimensions in this way, the weights are firmly held in the compartment 35 and eliminating any possibility of longitudinal movement in the body 20 during casting. When the angler chooses to load the body 20 with only one weight and the weight region 20a is thus only partially filled, the interference fit between the weight and the body tends to retain the weight at the position in the weight region 20a which the angler sets. Normally, the angler pushes the weight all the way to the closed end 24 of the body 20 such that it sits in engagement with the abutments 25 which is better for casting Although the interference fit holds the weight in position, the closed end 24 of the body 20 is a particularly secure position for the weight since the relatively large forces encountered in casting tend to act in a direction which would urge the weight towards the abutments 25.

Thus, to reach the Figure 2 loaded condition, the angler must hold the cap 26 off to one side and slot the weights 40,42 successively into the compartment 35, and then the cap 26 released and allowed to return to its closed position.

By selection of a single weight or a combination of 2 weights from the set, a range of possible loadings for the swimfeeder is generated.

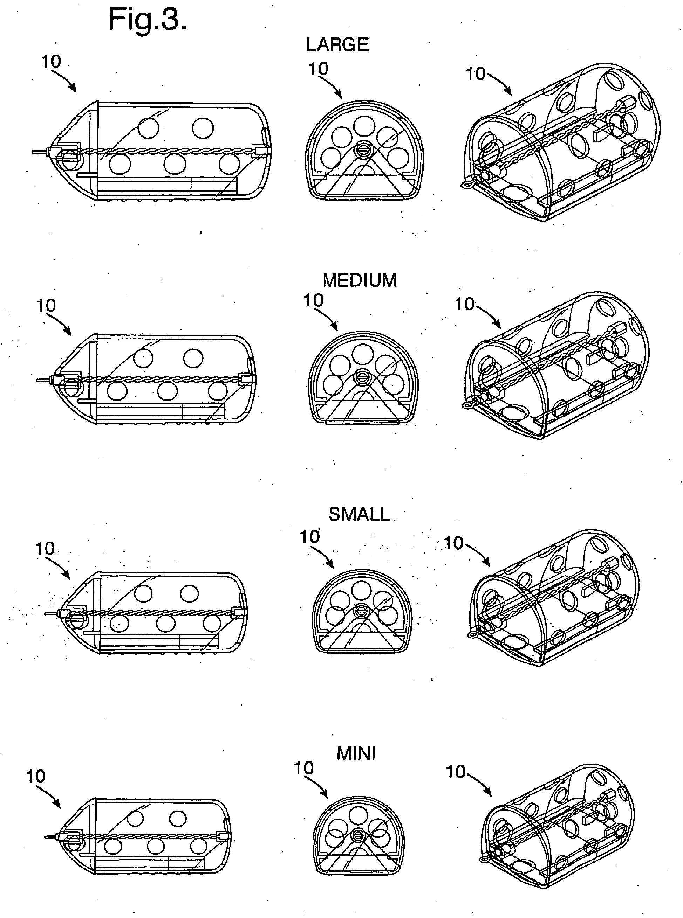

It is pointed out that the swimfeeder featured in Figures 1 and 2 is a large size swimfeeder. Figure 3 shows further smaller scale versions of the Figure 1 and 2 embodiment, namely medium, small and mini versions which use lighter weights, but otherwise are constructed and operate in the same way.

Table 1 shown below illustrates how for a swimfeeder of a given size, and using a set of 4 weights with various parameters, a range of loading for the swimfeeder is made possible. The "large" row corresponds to the swimfeeder featured in Figures 1 and 2.

**Table 1**

| | SMALL MAZAK | LARGE MAZAK | BOTH MAZAK | SMALL LEAD | LARGE LEAD | BOTH LEAD | S MAZAK S LEAD | L MAZAK S LEAD | S MAZAK L LEAD |
|---|---|---|---|---|---|---|---|---|---|
| LARGE | 10g | 20g | 30g | 16g | 34g | 50g | 26g | 36g | 44g |
| MEDIUM | 8g | 16g | 24g | 14g | 26g | 40g | 22g | 30g | 34g |
| SMALL | 6g | 12g | 18g | 10g | 20g | 30g | 16g | 22g | 26g |
| MINI | 4g | 8g | 12g | 7g | 13g | 20g | 11g | 15g | 17g |

Table 2 summarises the range of possible weight loadings. It will be noted that relatively small weight increments can be achieved over a wide range of loadings for a given size of swimfeeder.

**Table 2**

| LARGE | MEDIUM | SMALL | MINI |
|---|---|---|---|
| 10g | 8g | 6g | ^{4g} |
| 16g | 14g | 10g | 7g |
| 20g | 16g | 12g | 8g |
| 26g | 22g | 16g | 11g |
| 30g | 24g | 18g | 12g |
| 34g | 26g | 20g | 13g |
| 36g | 30g | 22g | 15g |
| 44g | 34g | 26g | 17g |
| 50g | 40g | 30g | 20g |

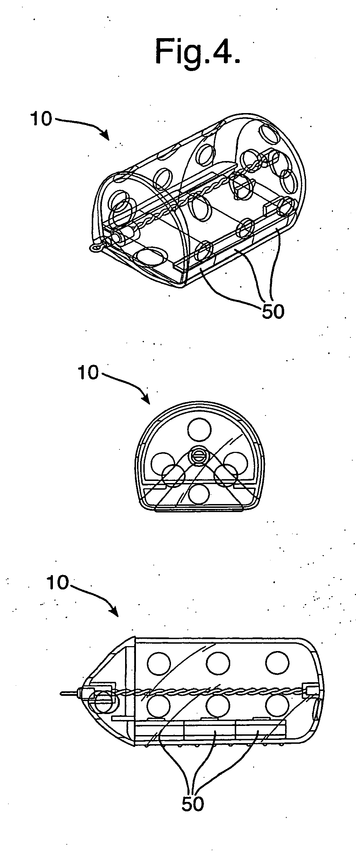

In Figure 4, another embodiment of the invention is shown. In this embodiment, the swimfeeder kit comprises a swimfeeder having a different arrangement of holes 32, and a set of 6 weights. The weights 50 are equally sized but comprise two different materials, again a lead weight and a mazak weight. For three different possible sizes of swimfeeder, the possible weight loadings using various combinations of weights from the set are shown.

**Table 3**

| | 1 MAZAK | 2 MAZAK | 3 MAZAK | 1 LEAD | 2 LEAD | 3 LEAD | 1 MAZAK 1 LEAD | 2 MAZAK 1 LEAD | 1 MAZAK 2 LEAD |
|---|---|---|---|---|---|---|---|---|---|
| LARGE | 10g | 20g | 30g | 16.5g | 33g | 49.5g | 26.5g | 36.5g | 43g |
| MEDIUM | 8g | 16g | 24g | 13.15g | 26.3g | 39.45g | 21.15g | 29.15g | 34.3g |
| SMALL | 6g | 12g | 18g | 9.75g | 19.5g | 29.25g | 15.75g | 21.75g | 25.5g |

Thus, it will be appreciated that an above-described swimfeeder kit provides the angler with a swimfeeder which may be conveniently loaded with a range of weights even in the messy conditions at the waterside without detaching the swimfeeder from the terminal tackle. Advantageously, the weights are constructed out of materials and made to a size which creates many permutations of possible total loading for the swimfeeder, whereby a considerable degree of fine tuning of the total loading can easily be achieved. As an additional or alternative way of creating different loading permutations, the weights can be partially hoffowed out while still retaining the same essential profile so as to be retained by the ledges 23a, 23b. In this way, the large weight of Figure 1, for example, could be reduced in mass, while still maintaining the same effective occupancy area in the weight region 20a.

It will be appreciated that the swimfeeder body has a number of advantageous structural features.

The outer shape of the swimfeeder is smooth, relatively streamlined and the specific geometry and dimensions carefully chosen experimentally to give a good performance in casting, retrieving and holding the bottom in a current. Because the compartment 35 is located within the body 20, the carefully designed outer shape does not change with loading and so can be cast in a predictable way which facilitates casting accuracy. It will be appreciated that a swimfeeder which oscillates or behaves erratically on the retrieve can cause variability in the line lay on the reel spool which, thereafter, adversely affects casting accuracy. Since the weights are held in the compartment 35 in a way which inhibits lateral movement, the lateral stability of the swimfeeder during casting assists with casting accuracy. In addition, since the centre of gravity of the swimfeeder remains on the same central longitudinal axis independent of whether a single weight or a combination of 2 or more weights from the set is or are loaded in the compartment 35, consistency in casting is facilitated. It is thought that it is also advantageous to locate the holes 32,32a such that they do not extend into the compartment 35 again to help make the streamlining of the swimfeeder independent of the loading. The hole 32a is located such that if a weight becomes jammed in position because of groundbait debris or the like, the weight can be dislodged and pushed towards the open end 22 of the body 20 by inserting an angler's disgorger through the hole 32a.

## Claims

1. A swimfeeder kit comprising a swimfeeder (10) having an elongate body (20) having an open end (22) and defining a region (20a) for weights and a region (20b) for bait, a cap (26) for closing the open end (22) and a set of weights (40, 42; 50), wherein more than one of the said weights may be loaded, at the selection of the angler, into the weight region (20a) via the open end (22) and occupy the weight region (20a) at the same time, **characterised in that** the centre of gravity of the weights (40, 42; 50) in the weight region (20a) Is kept on the same longitudinal axis (A-A) of the body (20) independent of the number of weights loaded in the weight region (20a).

2. A swimfeeder kit as in Claim 1, wherein each weight (40, 42; 50) in the set has a different mass.

3. A swimfeeder kit as in any preceding claim, wherein the set comprises at least one weight made from a first material having a first density, and at least one weight made from a second material having a second density, wherein the first and second density are different.

4. A swimfeeder kit as In Claim 3, wherein the first material comprises mazak or zamak and the second material comprises lead.

5. A swlmfeeder kit as in any preceding claim, wherein the weight region (20a) Is located at the bottom of the body (20), the weights (40, 42; 50) comprise slabs, and the weight region is adapted such that slabs in the weight region (20a) are held In minor face-to-minor face orientation.

6. A swimfeeder kit as in preceding claim, wherein the body (20) comprises a plurality of through-holes for bait, wherein the through-holes (32) open onto the bait region (20b) and not onto the weight region (20a).

7. A swimfeeder kit as any preceding claim, wherein the weight region (20a) is adapted such that weights (40, 42; 50) in the weight region (20a) are confined so as to prevent their lateral movement.

8. A swimfeeder kit as in any preceding claim, wherein the weights (40, 42; 50) in the weight region (20a) are held by the body (20) in an interference fit.

9. A swimfeeder kit as in any of Claims 5 to 8, wherein the weight region comprises a single compartment (35) defined between a base (21a), a wall (21b) upstanding from the base and a formation (23a, 23b) projecting inwardly from said wall (21b).

10. A swimfeeder kit as in Claim 9, wherein the slabs are of identical cross-section, and a first group of the slabs has a first length, and a second group of slabs has a second length, wherein a combination of at least one slab taken from the first group and at least one slab taken from the second group fills the weight region (20a) exactly to capacity.

11. Use of a swimfeeder kit as in any of Claims 1 to 10 by selecting one or more of said weights (40, 42; 50) from said set and loading the selected weights Into the weight region (20a).

## Patentansprüche

1. Swimfeeder-Ausrüstung, die einen Swimfeeder (10) mit einem länglichen Körper (20), der ein offenes Ende (22) aufweist und einen Bereich (20a) für Gewichte und einen Bereich (20b) für Köder, eine Kappe (26) zum Schließen des offenen Endes (22) und einen Satz von Gewichten (40, 42; 50) definiert, wobei mehr als eines der besagten Gewichte, wie vom Angler selektiert, über das offene Ende (22) in den Gewichtsbereich (20a) geladen werden und den Gewichtsbereich (20a) gleichzeitig besetzen könnten, **dadurch gekennzeichnet, dass** der Schwerpunkt der Gewichte (40, 42; 50) im Gewichtsbereich (20a) auf derselben Längsachse (A-A) des Körpers (20), unabhängig von der Anzahl der in den Gewichtsbereich (20a) geladenen Gewichte, gehalten wird.

2. Swimfeeder-Ausrüstung nach Anspruch 1, wobei jedes Gewicht (40, 42; 50) im Satz eine andere Masse aufweist.

3. Swimfeeder-Ausrüstung nach einem vorhergehenden Anspruch, wobei der Satz zumindest ein Gewicht, das aus einem ersten Material mit einer ersten Dichte hergestellt ist und zumindest ein Gewicht umfasst, das aus einem zweiten Material mit einer zweiten Dichte hergestellt ist, wobei die ersten und zweiten Dichten verschieden sind.

4. Swimfeeder-Ausrüstung nach Anspruch 3, wobei das erste Material Mazak oder Zamak umfasst und das zweite Material Blei umfasst.

5. Swimfeeder-Ausrüstung nach einem vorhergehenden Anspruch, wobei sich der Gewichtsbereich (20a) am Boden des Körpers (20) befindet, die Gewichte (40; 42; 50) Platten umfassen und der Gewichtsbereich so angepasst ist, dass Platten im Gewichtsbereich (20a) in der Orientierung kleine Fläche-zu-kleiner Fläche gehalten werden.

6. Swimfeeder-Ausrüstung nach einem vorhergehenden Anspruch, wobei der Körper (20) eine Mehrheit von Durchgangslöchern für Köder umfasst, wobei sich die Durchgangslöcher (32) auf den Köderbereich (20b) und nicht auf den Gewichtsbereich (20a) öffnen.

7. Swimfeeder-Ausrüstung nach einem vorhergehenden Anspruch, wobei der Gewichtsbereich (20a) so angepasst ist, dass Gewichte (40, 42; 50) im Gewichtsbereich (20a) eingegrenzt sind, um ihre Querbewegung zu verhindern.

8. Swimfeeder-Ausrüstung nach einem vorhergehenden Anspruch, wobei die Gewichte (40, 42; 50) im Gewichtsbereich (20a) durch den Körper (20) in einem Festsitz gehalten werden.

9. Swimfeeder-Ausrüstung nach einem der Ansprüche 5 bis 8, wobei der Gewichtsbereich ein Einzelfach (35) umfasst, das zwischen einer Basis (21a), einer Wand (21b) aufrecht stehend aus der Basis und einer Formation (23a, 23b) definiert ist, die von besagter Wand (21b) nach innen hervorragt.

10. Swimfeeder-Ausrüstung nach Anspruch 9, wobei die Platten identischen Querschnitts sind und eine erste Plattengruppe eine erste Länge aufweist und eine zweite Plattengruppe eine zweite Länge aufweist, wobei eine Kombination von zumindest einer Platte, die der ersten Gruppe entnommen wurde und zumindest einer Platte, die der zweiten Gruppe entnommen wurde, den Gewichtsbereich (20a) exakt bis zur Kapazität fiillt.

11. Verwendung einer Swimfeeder-Ausrüstung nach einem der Ansprüche 1 bis 10 durch Selektieren eins oder mehrerer besagter Gewichte (40, 42; 50) aus besagtem Satz und Laden der selektierten Gewichte in den Gewichtsbereich (20a).

## Revendications

1. Un kit de « swim-feeder » composé d'un swim-feeder (10) doté d'un corps allongé (20) avec une extrémité ouverte (22), et définissant une zone (20a) pour les poids et une autre (20b) pour l'amorce, un chapeau (26) pour la fermeture de l'extrémité ouverte (22), et un jeu de poids (40, 42 ; 50), dans lequel le pêcheur peut, s'il le souhaite, placer plus d'un desdits poids dans la zone des poids (20a) par l'extrémité ouverte (22), ces poids occupant ensemble la zone des poids (20a), ce kit étant **caractérisé par le fait que** le centre de gravité des poids (40, 42 ; 50) dans la zone des poids (20a) est maintenu dans le même axe longitudinal (A - A) du corps (20), indépendamment du nombre de poids introduit dans la zone des poids (20a).

2. Un kit de « swim-feeder » conforme à la Revendication 1, dans lequel chaque poids (40, 42 ; 50) du jeu de poids présente une masse diverse.

3. Un kit de « swim-feeder » conforme à une quelconque des revendications précédentes, dans lequel le jeu comprend au minimum un poids réalisé avec un premier matériau présentant une première densité, et au minimum un poids réalisé avec un deuxième matériau présentant une deuxième densité, la première et la deuxième densité étant différentes.

4. Un kit de « swim-feeder » conforme à la Revendication 3, dans lequel le premier matériau comprend du mazak ou zamak, et le deuxième matériau comprend du plomb.

5. Un kit de « swim-feeder » conforme à une quelconque des revendications précédentes, dans lequel la zone des poids (20a) est située au fond du corps (20), les poids (40, 42 ; 50) comprennent des dalles, et la zone des poids est adaptée de sorte que les dalles situées dans la zone des poids (20a) sont orientées face mineure à face mineure).

6. Un kit de « swim-feeder » conforme à une quelconque des revendications précédentes, dans lequel le corps (20) comprend un certain nombre d'orifices pour l'amorce, et les orifices (32) ouvrent sur la zone de l'amorce (20b) et non pas sur celle des poids (20a).

7. Un kit de « swim-feeder » conforme à une quelconque des revendications précédentes, dans lequel la zone des poids (20a) a été adaptée de sorte que les poids (40, 42 ; 50) dans la zone des poids (20a) sont confinés de façon à en empêcher le déplacement latéral.

8. Un kit de « swim-feeder » conforme à une quelconque des revendications précédentes, dans lequel les poids (40, 42 ; 50) dans la zone des poids (20a) sont maintenus par le corps (20) par emmanchement dur.

9. Un kit de « swim-feeder » conforme à une quelconque des revendications 5 à 8, dans lequel la zone des poids comprend un compartiment unique (35) délimité par une base (21a), une paroi (21b) remontant de la base, et une formation (23 a, 23b) faisant saillie vers l'intérieur à partir de ladite paroi (21b).

10. Un kit de « swim-feeder » conforme à la Revendication 9, dans lequel d'une part les dalles présentent une section transversale identique, d'autre part un premier groupe de dalles présente une première longueur, et un deuxième groupe de dalles présente une deuxième longueur, dans lequel la combinaison d'au moins une dalle du premier groupe et une dalle du deuxième groupe remplissent de façon précise la zone des poids (20a).

11. L'usage d'un kit de « swim-feeder », conformément à une quelconque des revendications 1 à 10, par la sélection d'un ou plusieurs desdits poids (40, 42 ; 50) dudit jeu, et l'introduction des poids sélectionnés dans la zone des poids (20a).
